## Europäisches Patentamt

## European Patent Office

## Office européen des brevets

(19)

(11) Veröffentlichungsnummer: **0 025 011**
**B1**

(12) **EUROPÄISCHE PATENTSCHRIFT**

(45) Veröffentlichungstag der Patentschrift:
08.12.82

(51) Int. Cl.³: **C 09 K 5/00**

(21) Anmeldenummer: **80810228.9**

(22) Anmeldetag: **16.07.80**

(54) Flüssige Wärmeträgerzubereitung und ihre Verwendung.

(30) Priorität: **23.08.79 CH 7689/79**

(43) Veröffentlichungstag der Anmeldung:
**11.03.81 Patentblatt 81/10**

(45) Bekanntmachung des Hinweises auf die Patenterteilung:
**08.12.82 Patentblatt 82/49**

(84) Benannte Vertragsstaaten:
**AT BE DE FR GB IT LU NL SE**

(56) Entgegenhaltungen:
**DE-B-2 739 577**
**US-A-2 449 561**
**US-A-2 558 030**

(73) Patentinhaber: **Scheller AG, Hottingerstrasse 21,
CH-8021 Zürich (CH)**

(72) Erfinder: **von Burg, Hanspeter, Luzernerstrasse 92,
CH-6330 Cham (CH)**

(74) Vertreter: **Brühwiler, Hans et al, Brühwiler, Meier & Co.
Patentanwälte VSP Löwenstrasse 1 Postfach 996,
CH-8021 Zürich (CH)**

BUNDESDRUCKEREI BERLIN

## Flüssige Wärmeträgerzubereitung und ihre Verwendung

Die Erfindung betrifft eine flüssige Wärmeträgerzubereitung.

Flüssige Wärmeträger werden in den verschiedensten Anlagen zur Zu- oder Wegführung von Wärme verwendet. Ihre wirtschaftliche Bedeutung wächst mit dem vermehrten Einsatz von Sonnenkollektoren, Wärmepumpen und dergleichen.

An flüssige Wärmeträger werden, abgesehen von guter Wärmeleitfähigkeit und hoher spezifischer Wärme, eine Anzahl von weiteren Forderungen gestellt, deren wichtigste sind:

1.  Chemische Beständigkeit im gewünschten Druck- und Temperaturbereich.
2.  Niedrige Viskosität über einen weiten Temperaturbereich.
3.  Geeignetes Strömungsverhalten.
4.  Geringe Toxizität, biologisch abbaubar.
5.  Nicht korrodierend.

Der am längsten verwendete flüssige Wärmeträger ist selbstverständlich Wasser, dessen Einsatz allerdings nur oberhalb 0°C in Frage kommt. Dies gilt im übrigen auch für eine Reihe von organischen Flüssigkeiten, die als Wärmeträger verwendet werden können. Salzlösungen können zwar unterhalb 0°C eingesetzt werden, sind aber stark korrosiv und können in den Leitungen Ablagerungen und Krusten bilden. Für Temperaturbereiche, wie sie bei Wärmepumpen, bestimmten Sonnenkollektoren und Klimaanlagen in Frage kommen, werden auch Lösungen von Äthylenglykol oder Propylenglykol in Wasser verwendet.

Allerdings ist Äthylenglykol toxisch und die Fließeigenschaften, d. h. Viskosität und Strömungsverhalten, sind bei beiden Glykolen unbefriedigend.

Durch die vermehrte Verwendung von alternativen Energieträgern bestand ein dringender Bedarf für flüssige Wärmeträger mit verbesserten Eigenschaften. Aufgabe der vorliegenden Erfindung ist es daher, einen flüssigen Wärmeträger zu finden, der die Nachteile der bisher verwendeten Wärmeträger nicht aufweist.

Es wurde nun eine flüssige Wärmeträgerzubereitung mit verbesserten Eigenschaften gefunden. Diese Zubereitung enthält die folgenden Komponenten:

a)  25 Gew.-% Polyäthylenglykol, das ein Molekulargewicht von 180 bis 250 und einen Stockpunkt, gemessen nach DIN 51 583, von $-50 \pm 3°C$ aufweist;
b)  $20 \pm 1$ Gew.-% 1,2-Propylenglykol;
c)  10 bis 1000 ppm Polyäthylenoxid, das ein Molekulargewicht von $4$ bis $6 \cdot 10^6$ aufweist;
d)  etwa 50 Gew.-% entsalzenes Wasser
und gegebenenfalls mikrobiocide und/oder Korrosionsschutzmittel.

Alle Komponenten der erfindungsgemäßen Zubereitung sind bekannt und im Handel erhältlich.

Das verwendete Polyäthylenglykol weist ein Molekulargewicht von 180 bis 250, vorzugsweise von 190 bis 210, auf. Die bevorzugt eingesetzten Mengen für Polyäthylenoxid liegen zwischen 30 bis 1000 ppm.

Die flüssige Zubereitung kann gewünschtenfalls Korrosionsschutzmittel enthalten. Hierfür werden aus toxikologischen Gründen mit Alkanolaminen neutralisierte Fettsäuren, welche biologisch abbaubar sind, eingesetzt.

Als weitere Zusätze kommen mikrobiocide Mittel, wie quaternäre Aminoverbindungen, welche die Ansiedlung und Vermehrung von Mikroorganismen, insbesondere die Schleimbildung in Leitungen und Pumpen, verhindern, in Frage.

Die Zubereitung enthält etwa 50 Gew.-% entsalztes Wasser als Komponente d). Dies bedeutet in der Praxis, daß bei der Herstellung der Zubereitung so viel entsalztes Wasser zugegeben wird, daß die Summe aller Komponenten 100 Gew.-% ergibt.

Die neue Zubereitung weist gegenüber den bekannten Flüssigkeiten verschiedene, zum Teil überraschende Vorteile auf.

Die neue Zubereitung ist unter verschiedensten Bedingungen chemisch beständig, so daß sie ohne weiteres ständig bei Temperaturen von $-30$ bis $+100°C$, unter entsprechendem Druck bis 140°C, eingesetzt werden kann. Innerhalb dieses Temperaturbereiches findet auch nach längerer Zeit weder eine Zersetzung der einzelnen Komponenten noch eine Ausscheidung aus der Lösung statt.

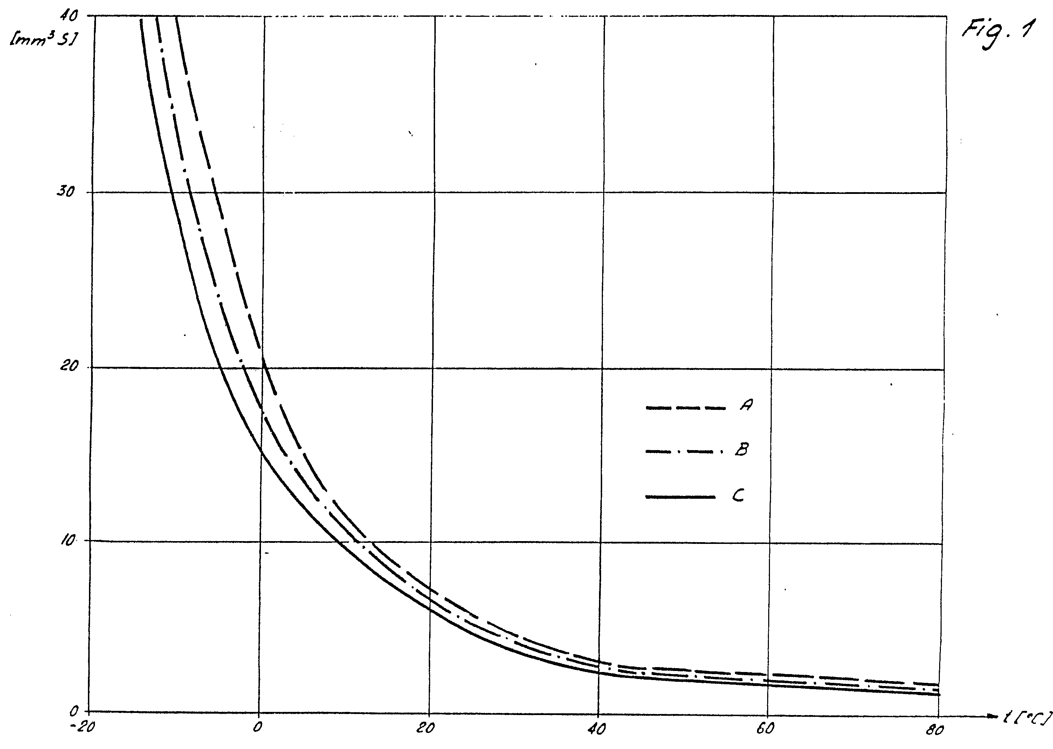

Die Viskositätseigenschaften der neuen Zubereitung sind ausgezeichnet. Sie sind jenen von Polyäthylenglykol/Wasser und auch Propylenglykol/Wasser überlegen. Beim Mischen von Polyäthylenglykol/Propylenglykol/Wasser war zu erwarten, daß Werte, die zwischen jenen der erstgenannten Zweikomponentensystemen liegen, erhalten werden. Überraschenderweise wurde nun gefunden, daß die Viskosität, d. h. die Fließeigenschaften, der erfindungsgemäßen Zubereitung viel besser sind als dies anhand der bekannten Viskositätswerte der obengenannten Zweikomponentensysteme erwartet werden konnte. Die Kurven für die kinematische Viskosität in Abhängigkeit von der Temperatur für Polyäthylenglykol/Wasser 50 : 50 (A), Propylenglykol/Wasser 50 : 50 (B) und die erfindungsgemäße Zubereitung (C), sind in Figur 1 dargestellt. Es ist, wie bereits oben gesagt, überraschend, daß die Werte für die erfindungsgemäße Wärmeträgerzubereitung sich nicht im Flächenbereich, welcher von den Viskositätskurven der beiden bekannten Mischungen umschlossen wird, befinden, sondern bessere Werte zeigen als dies anhand der darin enthaltenen Komponenten zu erwarten war.

Da durch Reduktion des Reibungsfaktors der Druckabfall $\Delta$p in Rohrleitungen bei Verwendung der erfindungsgemäßen Zubereitung geringer ist als bei der Verwendung vergleichbarer bekannter Wärmeträgerflüssigkeiten, kann bei gleicher Pumpenleistung eine größere Menge der erfindungsgemäßen Zubereitung transportiert werden, was einen größeren Wärmeaustausch bewirkt. Alternativ kann bei gleicher Pumpenleistung der Querschnitt der Leitungen vermindert werden.

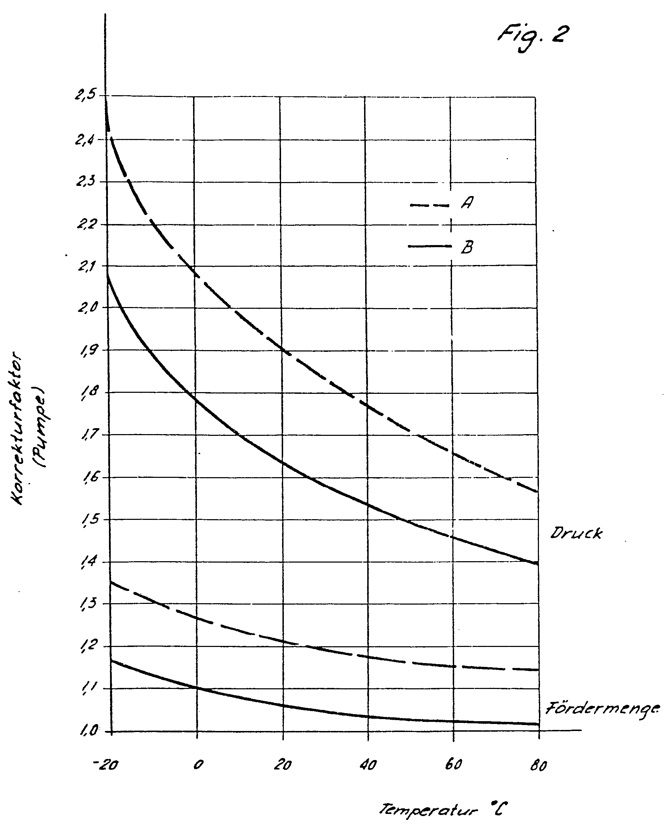

Selbstverständlich kann eine Wärmeaustauscheranlage mit der neuen Zubereitung bei gleichbleibender ausgetauschter Wärmemenge und gleichbleibendem Leitungsdurchmesser, verglichen mit bekannten Wärmeträgerflüssigkeiten, mit kleinerer Pumpenleistung betrieben werden. In Figur 2 werden die Korrekturfaktoren für eine gegebene Pumpe, einerseits für ein Gemisch Propylenglykol/Wasser 50 : 50 und andererseits für die erfindungsgemäße Zubereitung miteinander verglichen, wobei die vorteilhaften Eigenschaften der erfindungsgemäßen Zubereitung eindeutig sind. Die Kurven von Figur 2 wurden mit einer Pumpe mit einem Rotor mit einem Durchmesser von 0,052 m bei einer Drehzahl von 1400 pro Minute aufgenommen. Kurve A stellt die Werte für ein Gemisch von Propylenglykol/Wasser und Kurve B für die erfindungsgemäße Zubereitung dar.

Es war zwar bekannt, zur Reduktion des Reibungsfaktors von Wasser, z. B. von Löschwasser, hochmolekulare Polyäthylenoxide zu verwenden, jedoch konnte nicht erwartet werden, daß diese auch im Gemisch mit anderen Stoffen, wie Polyäthylenglykol und 1,2-Propylenglykol, ein günstigeres Strömungsverhalten ergeben. Im Gegenteil, es wurde bei einer solchen Kombination eine schlechtere Solvatation und somit ungeeignetere Strömungseigenschaften erwartet.

Durch die ausgezeichneten Strömungseigenschaften der erfindungsgemäßen Wärmeträgerzubereitung kann mit der gleichen Pumpe eine gegenüber Polyäthylenglykol/Wasser oder Propylenglykol/Wasser um etwa 20% höhere Pumpenleistung und somit auch ein höherer Wärmetransport erzielt werden.

Die neue Zubereitung ist nicht-toxisch, was nicht nur bei der Handhabung eine Rolle spielt, sondern auch bei eventuellen Leckstellen im Wärmesystem von Bedeutung ist. So ist es z. B. bei Wärmepumpen wichtig, daß bei Beschädigung der Leitungen keine giftigen oder schädlichen Substanzen in den Boden, in das Wasser oder z. B. bei Sonnenkollektoren in die Atmosphäre gelangen. Die Zubereitung ist außerdem nicht brennbar, d. h., ein Flammpunkt kann nicht ermittelt werden.

Die erfindungsgemäße Wärmeträgerzubereitung ist nicht korrosiv und gut verträglich mit Leitungs- und Pumpenmaterialien, wie Metallen und Kunststoffen, insbesondere auch mit dem in Wärmeaustauschereinrichtungen verwendeten Kupfer, Polyäthylen, Polypropylen, Melaminharzen, Polymethacrylaten und dergleichen.

Die erfindungsgemäßen flüssigen Wärmeträgerzubereitungen können zum Wärmetransport im Bereich von −30 bis +100°C, unter entsprechendem Druck bis 140°C, insbesondere in Heiz- und Kühlanlagen verwendet werden. Solche Anlagen sind beispielsweise Wärmepumpen, Sonnenkollektorsysteme, Wärmerückgewinnungs- und Klimaanlagen.

Die nachfolgenden Beispiele sollen die Erfindung weiter veranschaulichen.

### Beispiel 1

| | |
|---|---|
| Polyäthylenglykol (mittleres Molekulargewicht 190 bis 210, Stockpunkt −47°C/−50°C) | 24,5% |
| 1,2-Propylenglykol | 20,5% |
| Raziol WKS-3 (Raziol Chemie, Nürnberg) | 1,0% |
| Polyäthylenoxid (Molekulargewicht $5 \cdot 10^6$) | $0,3 \cdot 10^{-3}$% |
| Dodigen 180 (Hoechst AG, Frankfurt) | $0,3 \cdot 10^{-3}$% |
| Entsalztes Wasser auf | 100% |

### Herstellung der Zubereitung

In 1% des zu verwendenden Wassers wird die notwendige Menge Polyäthylenoxid gelöst.

Die Herstellung dieser Lösung erfolgt durch Vorlegen des Wassers und langsames Einstreuen des Polyäthylenoxides. Als Rührwerk wird ein Anker- oder Propellerrührer verwendet. Die Drehzahl sollte 600 bis 700 UpM betragen, diese Rührgeschwindigkeit wird ca. 2 Minuten beibehalten und dann auf ca. 60 UpM reduziert und bei dieser Drehzahl ca. 3 Stunden bis zur vollständigen Lösung des Polyäthylenoxides weiter gerührt.

Die Restmenge Wasser wird in einem Kessel mit Ankerrührwerk vorgelegt und unter Rühren (ca. 60 UpM) der Reihe nach 1,2-Propylenglykol, Polyäthylenglykol, Dodigen 180 und Raziol WKS-3 zugegeben. Nach ca. 15 Minuten Rührzeit wird die wäßrige Polyäthylenoxidlösung zugegeben und bis zur vollständigen Verteilung ca. 30 Minuten weiter gerührt.

### Beispiel 2

| | |
|---|---|
| Polyäthylenglykol (mittleres Molekulargewicht 190 bis 200, Stockpunkt −47°C/−50°C) | 25,1% |
| 1,2-Propylenglykol | 19,9% |
| Raziol WKS-3 (Raziol Chemie, Nürnberg) | 1,0% |

Polyäthylenoxid
(Molekulargewicht 5 · 10⁶)    $0,8 \cdot 10^{-3}$%
Dodigen 180
(Hoechst AG, Frankfurt)    $0,3 \cdot 10^{-3}$%
Entsalztes Wasser auf    100%

Die Vermischung der einzelnen Komponenten erfolgte wie in Beispiel 1 angegeben.

## Patentansprüche

1. Flüssige Wärmeträgerzubereitung, bestehend aus.

a) 25 Gew.-% Polyäthylenglykol, das ein Molekulargewicht von 180 bis 250 und einen Stockpunkt, gemessen nach DIN 51 583, von −50±3°C aufweist;

b) 20±1 Gew.-% 1,2-Propylenglykol;

c) 10 bis 1000 ppm Polyäthylenoxid, das ein Molekulargewicht von 4 bis 6 · 10⁶ aufweist; und

d) etwa 50 Gew.-% entsalztes Wasser.

2. Zubereitung nach Anspruch 1, dadurch gekennzeichnet, daß sie ein Polyäthylenglykol mit einem Molekulargewicht von 190 bis 210 enthält.

3. Zubereitung nach Anspruch 1 oder 2, dadurch gekennzeichnet, daß sie 30 bis 1000 ppm Polyäthylenoxid enthält.

4. Zubereitung nach einem oder mehreren der vorangehenden Ansprüche, dadurch gekennzeichnet, daß sie ein mikrobiocides Mittel und/oder ein Korrosionsschutzmittel enthält.

5. Verwendung der Wärmeträgerzubereitung nach Anspruch 1 in Wärmeübertragungsanlagen.

6. Verwendung nach Anspruch 5 in Wärmepumpen, Sonnenkollektorsystemen, Wärmerückgewinnungs- und Klimaanlagen.

## Claims

1. Fluid heat-carrier preparation comprising:

a) 25% by weight of polyethyleneglycol having a molecular weight of 180 to 250 and a pour point, determined in accordance with DIN 51 583, of −50±3°C;

b) 20±1% by weight of 1,2-propyleneglycol;

c) 10 to 1000 ppm of polyethyleneoxide having a molecular weight of 4 to 6 · 10⁶; and

d) about 50% by weight of demineralized water.

2. Preparation as claimed in claim 1, characterized in that it comprises a polyethyleneglycol having a molecular weight of 190 to 210.

3. Preparation as claimed in claim 1 or 2, characerized in that it comprises 30 to 1000 ppm of polyethyleneoxide.

4. Preparation as claimed in one or several of the preceeding claims, characterized in that it comprises a microbiocidal agent and/or a anticorrosion agent.

5. Use of the preparation as claimed in claim 1 in heat transfer systems.

6. Use as claimed in claim 5 in heat pumps, solar collecting systems, heat recovery systems, or air conditionning systems.

## Revendications

1. Composition fluide pour le transfert de la chaleur contenant:

a) 25% en poids de polyéthylèneglycol, présentant un poids moléculaire de 180 à 250 et un point de congélation, mesuré selon les normes du DIN 51 583, de −50±3°C;

b) 20±1% en poids de 1,2-propylène-glycol;

c) 10 à 1000 ppm d'oxyde de polyéthylène, présentant un poids moléculaire de 4 à 6 · 10⁶; et

d) environs 50% en poids d'eau déminéralisée.

2. Composition selon la revendication 1, caracérisée en ce qu'elle contient un polyéthylèneglycol d'un poids moléculaire de 190 à 210.

3. Composition selon l'une ou l'autre des revendications 1 et 2, caractérisée en ce qu'elle contient de 30 à 1000 ppm d'oxyde de polyéthylène.

4. Composition selon une ou plusieures des revendication précédantes, caractérisée en ce qu'elle contient un agent micro-biocide et/ou un agent anticorrosif.

5. Utilisation de la composition selon la revendication 1 dans des installations de transfert thermique.

6. Utilisation selon la revendication 5 dans des thermopompes, des systèmes de collecteurs solaires, des installations de récupération de chaleur et des installations de conditionnement d'air.

Fig. 1

0 025 011

Fig. 2